# FASCICULE DE BREVET EUROPEEN

(11) **EP 3 820 725 B1**
(45) Date de publication et mention de la délivrance du brevet: **20.04.2022**
(21) Numéro de dépôt: 19737843.3
(22) Date de dépôt: 05.06.2019
(51) Int. Cl.: B60K 15/07, F17C 1/00, F17C 13/08, B60K 1/04

(54) **DISPOSITIF DE FIXATION DE RÉSERVOIR DE GAZ, TEL QU'HYDROGÈNE, DANS UN VÉHICULE**
BEFESTIGUNGSEINRICHTUNG EINES GASTANKS, ETWA EINES WASSERSTOFFGASTANKS, IN EINEM FAHRZEUG
FIXATION DEVICE OF GAS TANK, LIKE HYDROGEN GAS TANK, IN A VEHICLE

(30) Priorité: 09.07.2018 FR 1856288
(43) Date de publication de la demande: 19.05.2021
(73) Titulaire: PSA Automobiles SA, 78300 Poissy (FR)
(72) Inventeur: PERU, Marc, 92290 CHATENAY MALABRY (FR); LEMBERT, Patricia, 78114 Magny Les Hameaux (FR)
(86) Numéro de dépôt international: PCT/FR2019/051331
(87) Numéro de publication internationale: WO 2020/012080

(56) Documents cités:
- WO-A1-95/32874
- DE-A1-102011 051 436
- FR-A1- 2 815 596
- JP-A- 2006 322 584
- US-A1- 2017 334 288
- US-B1- 6 257 360

## Description

L'invention concerne de manière générale le domaine des véhicules ayant comme carburant un gaz tel que l'hydrogène, et notamment les véhicules électriques à pile à combustible. Plus particulièrement, l'invention se rapporte à un dispositif de fixation de réservoir de gaz tel qu'hydrogène dans un véhicule, notamment un véhicule automobile.

Les réservoirs d'hydrogène embarqués dans les véhicules sont le plus souvent des bouteilles de forme cylindrique. Dans une bouteille, l'hydrogène est stocké sous forme gazeuse à haute pression, typiquement à une pression de 700 bar. Cette technologie permet de stocker suffisamment d'hydrogène pour octroyer une autonomie de 500 à 600 km à une voiture automobile équipée d'une pile à combustible.

De manière générale, l'utilisation de l'hydrogène comme carburant dans un véhicule pose un problème de sécurité lié au risque de fuites et d'explosion qui peuvent survenir en cas de chocs ou d'incendies. Ainsi, les réservoirs d'hydrogène embarqués dans les véhicules font l'objet de normes qui traitent notamment de leur durée de vie, de l'étanchéité, de la protection contre les chocs et d'autres aspects liés à la sécurité.

La protection contre les chocs, et notamment les chocs latéraux, demande une attention particulière compte-tenu des conséquences possibles. L'implantation des réservoirs d'hydrogène dans une zone centrale du véhicule favorise la présence de zones de déformation capables d'absorber une partie de l'énergie du choc. Le montage des réservoirs d'hydrogène sous la caisse du véhicule est une solution intéressante et permet de conserver des volumes de confort dans le coffre à bagages et l'habitacle. Le montage sous caisse offre une plus grande disponibilité de place qui facilite une meilleure optimisation de l'implantation par rapport aux différentes contraintes. De plus, en cas de surpression dans les réservoirs d'hydrogène, l'implantation sous la caisse facilite une échappée et une diffusion rapide du gaz dans l'air libre, réduisant ainsi le risque de déflagration.

Par ailleurs, pour satisfaire aux besoins de standardisation dans l'industrie automobile, il est souhaitable que la solution de montage des réservoirs de gaz puisse s'intégrer aisément dans une plateforme de véhicule existante.

Par US20170334288A1, il est connu de suspendre une bouteille cylindrique de gaz comprimé à un châssis de véhicule au moyen d'un dispositif de support. Le dispositif de support comprend des capots de protection et plusieurs brides annulaires de fixation. La bouteille est montée entre les capots de protection qui coiffent les extrémités arrondies de la bouteille. La fixation mécanique de la bouteille sur le châssis du véhicule est assurée par les capots de protection et les brides annulaires de fixation aux deux extrémités arrondies et en un ou plusieurs points intermédiaires sur la longueur de la bouteille. L'utilisation de moyens à élastomère ou ressort est préconisée pour la protection contre les chocs.

Il existe un besoin pour un dispositif de fixation de réservoir de gaz tel qu'hydrogène qui soit adapté pour une implantation longitudinale ou transversale du réservoir, autorisant une intégration aisée dans une plateforme de véhicule et contribuant à la protection du réservoir contre les chocs.

Selon un premier aspect, l'invention concerne un dispositif de fixation d'un réservoir de gaz sous le plancher d'un véhicule, le réservoir de gaz étant de type cylindrique et comportant des extrémités arrondies, le dispositif comprenant des premier et deuxième organes de fixation de réservoir, chaque dit organe de fixation de réservoir comprenant une platine de fixation, intégrant une interface de fixation mécanique sous plancher, et un moyen de support d'extrémité assemblé avec la platine de fixation et ayant une forme adaptée pour recevoir et supporter une dite extrémité arrondie du réservoir de gaz. Conformément à l'invention, le moyen de support d'extrémité comporte un réseau de cloisons radiales de répartition d'effort, les cloisons radiales de répartition d'effort étant réparties autour d'un axe central correspondant à un axe de montage du réservoir de gaz et ayant un profil de contact adapté à une forme de surface de l'extrémité arrondie.

Selon une caractéristique particulière, les premier et deuxième organes de fixation de réservoir sont formés chacun d'un même organe standard.

Selon une autre caractéristique particulière, le réseau de cloisons radiales de répartition d'effort est réalisé dans un matériau incluant du polypropylène et/ou un composite du type BMC et/ou SMC et les cloisons ont une épaisseur comprise entre 2,5 et 3,5 millimètres.

Selon encore une autre caractéristique particulière, chaque organe de fixation de réservoir comporte un amortisseur disposé entre la platine de fixation et le moyen de support d'extrémité.

Selon encore une autre caractéristique particulière, l'amortisseur comporte une couche amortissante formée d'un matériau élastomère et/ou d'un matériau composite et ayant une épaisseur comprise entre 5 et 20 millimètres.

Selon encore une autre caractéristique particulière, la couche amortissante comporte une rainure de passage de canalisation de gaz.

Selon encore une autre caractéristique particulière, la platine de fixation comprend un renfort annulaire de fixation agencé autour d'un trou de passage de canalisation de gaz, le renfort annulaire de fixation comportant au moins un trou de passage de vis de fixation et formant l'interface de fixation mécanique sous plancher.

Selon encore une autre caractéristique particulière, la platine de fixation est en acier ou en aluminium.

Selon un autre aspect, l'invention concerne aussi un véhicule ayant un réservoir de gaz comprenant au moins une bouteille d'hydrogène de type cylindrique montée sous le plancher, et comprenant un dispositif de fixation tel que décrit brièvement ci-dessus.

L'invention concerne aussi un véhicule, fabriqué sur la base d'une plateforme standard de véhicule, dans lequel les platines de fixation des organes de fixation d'extrémité du dispositif de fixation tel que décrit brièvement ci-dessus sont fixées sur des pattes de fixation standard de ladite plateforme de véhicule.

D'autres avantages et caractéristiques de la présente invention apparaîtront plus clairement à la lecture de la description détaillée ci-dessous de plusieurs formes de réalisation particulières de l'invention en référence aux dessins annexés, dans lesquels :
- les Figs.1A et 1B sont des vues tronquées en perspective montrant deux configurations d'implantation différentes de bouteilles d'hydrogène sous le plancher d'une même plateforme de véhicule ;
- la Fig.2 est une vue schématique en coupe longitudinale d'une bouteille d'hydrogène suspendue sous plancher à l'aide d'un dispositif de fixation selon l'invention ;
- les Figs.3 et 4 sont des vues partielles en perspective montrant un chapeau de fixation compris dans le dispositif de fixation selon l'invention et sa fixation sous plancher ;
- la Fig.5 est une vue éclatée en perspective du chapeau de fixation des Figs.3 et 4;
- la Fig.6 est une vue arrachée en perspective montrant un réseau de cloisons radiales de répartition d'effort compris dans le chapeau de fixation du dispositif selon l'invention ; et
- la Fig.7 est une vue schématique partielle en coupe longitudinale illustrant la répartition des efforts obtenue avec le réseau de cloisons radiales de répartition d'effort.

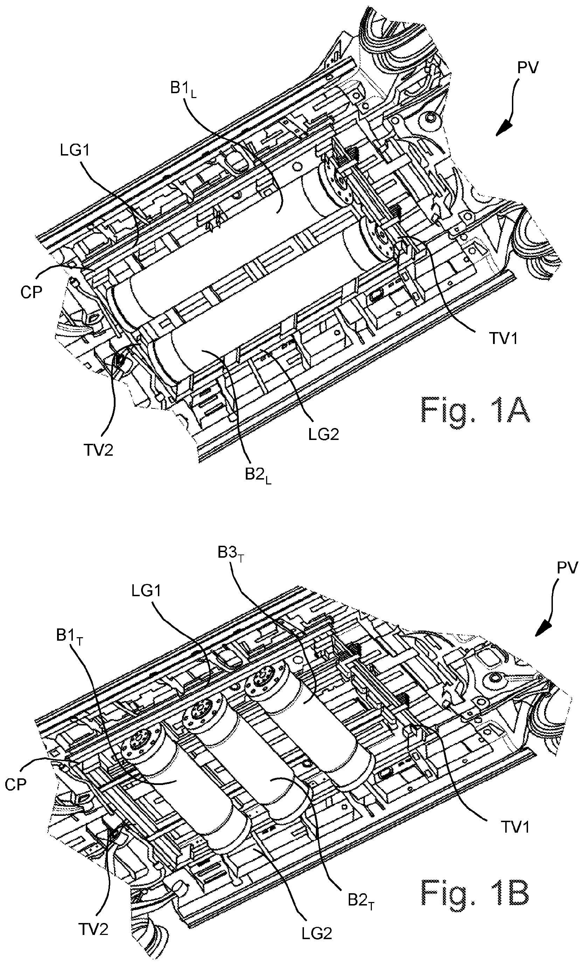

Les Figs.1A et 1B montrent deux implantations différentes d'un réservoir de gaz sous la forme de plusieurs bouteilles d'hydrogène B1_{L}, B2_{L}, et B1_{T} à B3_{T} sous le plancher d'une même plateforme de véhicule PV. Les bouteilles d'hydrogène B1_{L}, B2_{L}, et B1_{T} à B3_{T} sont ici de forme cylindrique, avec des extrémités arrondies.

A la Fig.1A, les bouteilles d'hydrogène B1_{L} et B2_{L} sont implantées côte-à-côte longitudinalement, c'est-à-dire, dans le sens de la longueur du véhicule. A la Fig.1B, les bouteilles d'hydrogène B1_{T} à B3_{T} sont implantées côte-à-côte transversalement.

Conformément à l'invention, les bouteilles d'hydrogène sont fixées sous le plancher de manière suspendue, au niveau de leurs deux extrémités arrondies.

Dans cette plateforme de véhicule PV, une structure existante dans la plateforme véhicule, sous la forme d'un cadre CP de protection contre les chocs, est mise à profit pour le montage des bouteilles d'hydrogène. Le cadre CP est par exemple un cadre de rigidification mécanique qui est utilisé aussi dans la plateforme PV pour le montage d'un pack de batteries électriques. Le cadre CP est ici de forme globalement rectangulaire et comprend deux longerons LG1, LG2, et deux traverses TV1, TV2. On notera cependant que le cadre CP de protection contre les chocs n'est pas indispensable à l'invention. Les bouteilles d'hydrogène sont mécaniquement très rigides de façon à résister à la pression interne du gaz comprimé. Elles sont conçues avec un coefficient de sécurité de l'ordre de deux et résistent jusqu'à une pression de 1500 bar. Dans certaines plateformes de véhicule, la rigidité mécanique des bouteilles d'hydrogène pourra s'avérer suffisante et il ne sera pas nécessaire de prévoir une structure de rigidification, comme le cadre CP montré aux Figs.1A et 1B, pour la protection des bouteilles d'hydrogène contre les chocs.

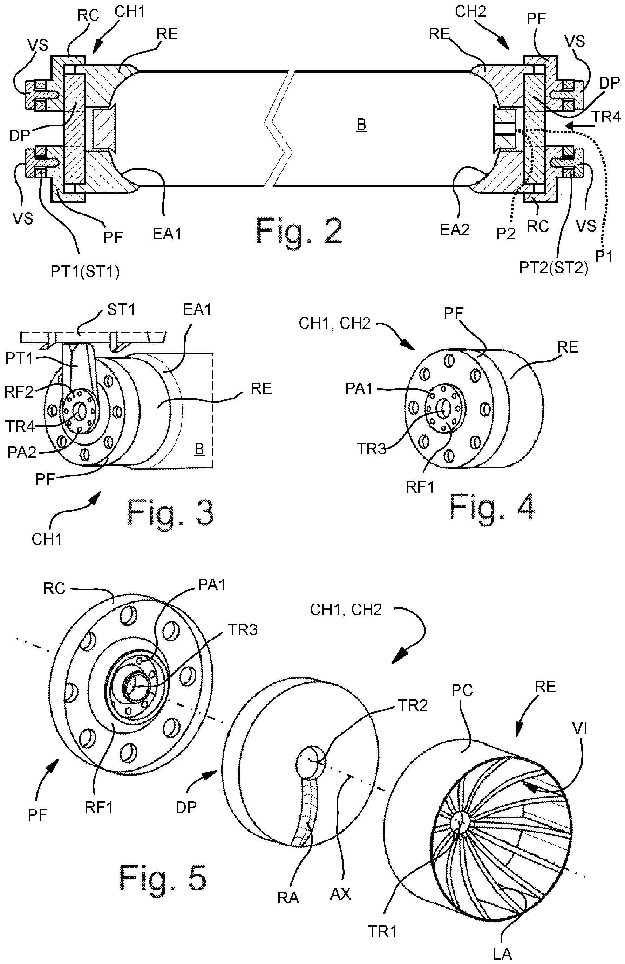

En référence aussi aux Figs.2 à 4, La bouteille d'hydrogène B est fixée sous le plancher, en étant suspendue par ses deux extrémités arrondies EA1 et EA2, à l'aide du dispositif de fixation de bouteille d'hydrogène selon l'invention.

Le dispositif de fixation de bouteille d'hydrogène est formé de deux chapeaux de fixation CH1 et CH2. Les chapeaux de fixation CH1 et CH2 sont ici des organes de fixation standard identiques, ce qui est favorable à la réduction des coûts par effet de volume.

La bouteille d'hydrogène B est enserrée par ses deux extrémités EA1 et EA2 entre les chapeaux de fixation CH1 et CH2. Les chapeaux de fixation CH1, CH2, sont fixés avec des vis VS à des pattes de fixation PT1, PT2, qui sont mécaniquement solidaires d'éléments structurels ST1, ST2, de la plateforme de véhicule, respectivement. Dans cette forme de réalisation, les éléments structurels ST1, ST2, sont les longerons LG1, LG2, ou les traverses TV1, TV2, visibles aux Figs.1A et 1B.

En référence aussi aux Figs.5 à 7, chaque chapeau de fixation CH1, CH2, comprend essentiellement une coupelle de répartition d'effort RE, un amortisseur DP et une platine de fixation PF formant embout de fixation.

Comme bien visible à la Fig.5, la coupelle de répartition d'effort RE a ici une forme globalement cylindrique. La coupelle de répartition d'effort RE forme un moyen de support d'extrémité pour l'extrémité arrondie EA1, EA2, de la bouteille B.

Conformément à l'invention, la coupelle de répartition d'effort RE comprend un volume intérieur ouvert VI qui est prévu pour recevoir et supporter l'extrémité arrondie EA1, EA2, de la bouteille B. Un réseau formé d'une pluralité de cloisons intérieures radiales LA est agencé à l'intérieur du volume intérieur VI.

Dans le volume intérieur VI de la coupelle de répartition d'effort RE, les cloisons LA se projettent radialement d'une paroi circulaire PC de la coupelle vers un axe central AX. L'axe central AX correspond à un axe de révolution de la coupelle et à un axe de montage de la bouteille d'hydrogène B.

La paroi circulaire PC assure le maintien mécanique des cloisons LA. Les cloisons LA sont régulièrement réparties sur la circonférence intérieure de la coupelle RE. Un trou TR1, centré sur l'axe AX, est aménagé dans une paroi arrière de la coupelle RE. Ce trou central TR1 est prévu pour le passage d'une canalisation de gaz.

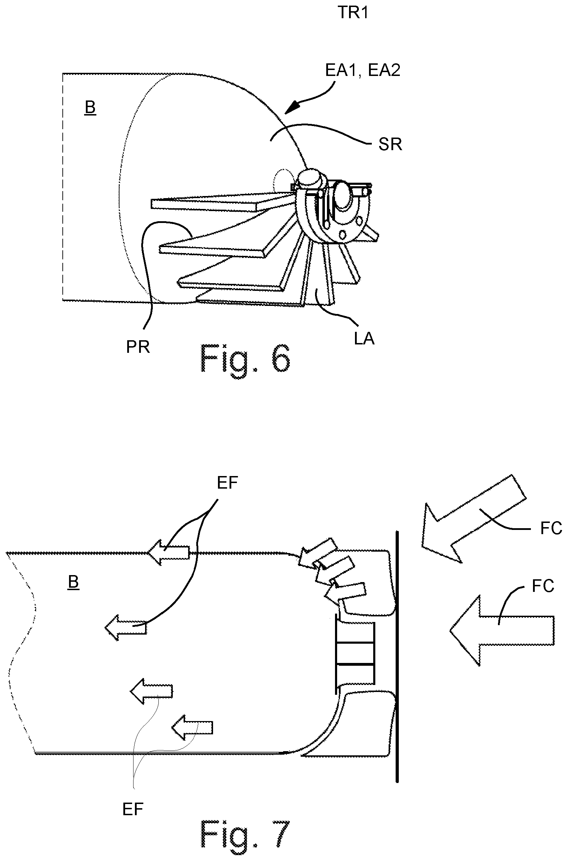

Comme bien visible dans la vue arrachée de la Fig.6 et les vues schématiques des Figs.2 et 7, les cloisons LA ont un profil de contact PR qui est adapté à la forme de surface SR de l'extrémité EA1, EA2, de la bouteille B. Dans cette forme de réalisation, le profil de contact PR épouse sensiblement la forme SR de la surface de l'extrémité EA1, EA2. Le réseau des cloisons LA assure un appui réparti sur toute la surface de l'extrémité EA1, EA2, et remplit ainsi une fonction de répartition et d'équilibrage des efforts qui s'exercent sur la bouteille B en cas de choc.

La fonction de répartition et d'équilibrage des efforts assurée par le réseau des cloisons LA est illustrée schématiquement à la Fig.7. Les cloisons LA répartissent l'énergie des forces de choc FC sur l'extrémité de la bouteille B en des efforts EF qui s'appliquent de manière plus uniforme sur le corps de celle-ci.

Dans cette forme de réalisation, la coupelle de répartition d'effort RE est une pièce venue de moulage. Un polypropylène ou un composite, tel que BMC (de « Bulk Molding Compound ») ou SMC (de « Sheet Molding Compound » en anglais) pourra être utilisé comme matériau pour la réalisation de cette pièce. L'épaisseur des cloisons LA sera comprise typiquement entre 2,5 mm et 3,5 mm selon le matériau utilisé.

Comme visible aux Figs.2 et 5, l'amortisseur DP se présente ici sous la forme d'un disque cylindrique, ayant un trou TR2 en son centre, qui apporte une couche de matériau amortissant. L'amortisseur DP est enserré entre une face arrière de la coupelle de répartition d'effort RE et la platine de fixation PF. Une rainure RA, réalisée typiquement par usinage, pourra être prévue dans l'amortisseur DP pour le passage de la canalisation de gaz.

L'amortisseur DP est réalisé typiquement dans un matériau élastomère. Cependant, un matériau composite pourra aussi être utilisé. L'amortisseur DP aura une épaisseur comprise entre 5 et 20 mm selon le matériau utilisé et l'application. L'amortisseur DP remplit une fonction de filtrage des pics des efforts mécaniques.

La platine de fixation PF se présente ici sous la forme d'un disque cylindrique, ayant un trou TR3 en son centre. La platine de fixation PF comprend notamment un renfort annulaire de fixation RF1 et un rebord de coiffage RC. La platine de fixation PF sera, par exemple, en acier ou en aluminium selon l'application.

Le renfort annulaire de fixation RF1, visible aux Figs.4 et 5, entoure le trou central TR3 et comporte plusieurs trous filetés PA1 répartis en cercle autour de l'axe central AX. Comme visible à la Fig.3, la patte de fixation PT1, PT2, comprend également un renfort annulaire de fixation, repéré RF2, qui entoure un trou TR4 et comporte plusieurs trous de passage de vis PA2. Les renforts annulaires de fixation RF1 et RF2 forment une interface mécanique pour la fixation de la platine PF sur la patte PT1, PT2, lors du montage de la bouteille B. Le serrage des vis VS, mis en place dans les trous PA1 et PA2 en coïncidence, assure la fixation mécanique de la platine PF sur la patte PT1, PT2.

La hauteur du rebord de coiffage RC de la platine PF sera ajustée en fonction de l'application, notamment de l'épaisseur de l'amortisseur DP. Comme visible dans la vue schématique de la Fig.2 et la Fig.5, la partie arrière de la coupelle de répartition d'effort RE s'emboîte dans la platine PF, avec le rebord RC de celle-ci entourant l'extrémité arrière de la paroi circulaire PC de la coupelle RE. L'amortisseur DP est maintenu entre la coupelle RE et la platine PF.

On notera que les pattes de fixation PT1, PT2, pourront être des éléments standard dans la plateforme de véhicule, utilisables non seulement pour la fixation des bouteilles d'hydrogène, mais aussi pour celle d'un pack de batteries électriques. Pour la fixation du pack de batteries électriques, outre les trous PA2, les trous TR4 des pattes de fixation PT1, PT2, pourront aussi être utilisés pour les passages de vis.

Comme montré à la Fig.2, par des traits en pointillé, le dispositif de fixation de bouteille d'hydrogène selon l'invention autorise deux configurations de passage P1 et P2 pour la canalisation de gaz.

Dans la première configuration de passage P1, la canalisation de gaz sort du chapeau de fixation CH1, CH2, en passant par les trous centraux alignés TR1, TR2 et TR3 du chapeau et le trou TR4 de la patte de fixation PT1, PT2.

Dans la deuxième configuration de passage P2, la canalisation de gaz sort du chapeau de fixation CH1, CH2, en passant par la rainure RA de l'amortisseur DF prévue à cet effet.

L'invention ne se limite pas aux formes de réalisation particulières qui ont été décrites ici à titre d'exemple. L'homme du métier, selon les applications de l'invention, pourra apporter différentes modifications et variantes entrant dans le champ de protection de l'invention.

## Revendications

1. Dispositif de fixation d'un réservoir de gaz (B) sous le plancher d'un véhicule, ledit réservoir de gaz (B) étant de type cylindrique et comportant des extrémités arrondies (EA1, EA2), ledit dispositif comprenant des premier et deuxième organes de fixation de réservoir (CH1, CH2), chaque dit organe de fixation de réservoir (CH1, CH2) comprenant une platine de fixation (PF), intégrant une interface de fixation mécanique sous plancher, et un moyen de support d'extrémité (RE) assemblé avec ladite platine de fixation (PF) et ayant une forme (VI) adaptée pour recevoir et supporter une dite extrémité arrondie (EA1, EA2) dudit réservoir de gaz (B), **caractérisé en ce que** ledit moyen de support d'extrémité (RE) comporte un réseau de cloisons radiales de répartition d'effort (LA), lesdites cloisons radiales de répartition d'effort (LA) étant réparties autour d'un axe central (AX) correspondant à un axe de montage dudit réservoir de gaz (B) et ayant un profil de contact (PR) adapté à une forme de surface (SR) de ladite extrémité arrondie (EA1, EA2).

2. Dispositif de fixation selon la revendication 1, **caractérisé en ce que** lesdits premier et deuxième organes de fixation de réservoir (CH1, CH2) sont formés chacun d'un même organe standard.

3. Dispositif selon la revendication 1 ou 2, **caractérisé en ce que** ledit réseau de cloisons radiales de répartition d'effort (LA) est réalisé dans un matériau incluant du polypropylène et/ou un composite du type BMC et/ou SMC et lesdites cloisons (LA) ont une épaisseur comprise entre 2,5 et 3,5 millimètres.

4. Dispositif selon l'une quelconque des revendications 1 à 3, **caractérisé en ce que** chaque dit organe de fixation de réservoir (CH1, CH2) comporte un amortisseur (DP) disposé entre ladite platine de fixation (PF) et ledit moyen de support d'extrémité (RE).

5. Dispositif selon la revendication 4, **caractérisé en ce que** ledit amortisseur (DP) comporte une couche amortissante formée d'un matériau élastomère et/ou d'un matériau composite et ayant une épaisseur comprise entre 5 et 20 millimètres.

6. Dispositif selon la revendication 5, **caractérisé en ce que** ladite couche amortissante comporte une rainure de passage de canalisation de gaz (RA).

7. Dispositif selon l'une quelconque des revendications 1 à 6, **caractérisé en ce que** ladite platine de fixation (PF) comprend un renfort annulaire de fixation (RF1) agencé autour d'un trou de passage de canalisation de gaz (TR3), ledit renfort annulaire de fixation (RF1) comportant au moins un trou de passage de vis de fixation (PA1) et formant ladite interface de fixation mécanique sous plancher.

8. Dispositif selon l'une quelconque des revendication 1 à 7, **caractérisé en ce que** ladite platine de fixation (PF) est en acier ou en aluminium.

9. Véhicule ayant un réservoir de gaz comprenant au moins une bouteille d'hydrogène (B) de type cylindrique montée sous le plancher, **caractérisé en ce qu'**il comprend un dispositif de fixation selon l'une quelconque des revendications 1 à 8.

10. Véhicule selon la revendication 9, fabriqué sur la base d'une plateforme standard de véhicule, **caractérisé en ce que** lesdites platines de fixation (PF) des organes de fixation d'extrémité (CH1, CH2) dudit dispositif de fixation sont fixées sur des pattes de fixation standard (PT1, PT2) de ladite plateforme de véhicule.

## Patentansprüche

1. Vorrichtung zum Befestigen eines Gastanks (B) unter dem Boden eines Fahrzeugs, wobei der Gastank (B) vom zylindrischen Typ ist und abgerundete Enden (EA1, EA2) umfasst, wobei die Vorrichtung erste und zweite Elemente (CH1, CH2) umfasst, wobei jedes Tankbefestigungselement (CH1, CH2) eine Befestigungsplatte (PF) umfasst, die eine mechanische Befestigungsschnittstelle unter dem Boden integriert, und ein Endstützmittel (RE), das mit der Befestigungsplatte (PF) zusammengebaut ist und eine Form (VI) hat. angepasst, um ein abgerundetes Ende (EA1, EA2) des Gastanks (B) aufzunehmen und zu stützen, **dadurch gekennzeichnet, dass** das Endstützmittel (RE) ein Netzwerk von radialen Kraftverteilungstrennwänden (LA) umfasst, wobei die radialen Kraftverteilungstrennwände (LA), die um eine Mittelachse (AX) verteilt sind, die einer Montageachse des Gastanks (B) entspricht, und ein Kontaktprofil (PR) aufweisen, das an eine Form von angepasst ist Oberfläche (SR) des abgerundeten Endes (EA1, EA2).

2. Vorrichtung zum Befestigen nach Anspruch 1, **dadurch gekennzeichnet, dass** die ersten und zweiten Behälterbefestigungselemente (CH1, CH2) jeweils aus demselben Standardelement gebildet sind.

3. Vorrichtung nach Anspruch 1 oder 2, **dadurch gekennzeichnet, dass** das Netz von Trennwänden (LA) zur radialen Kraftverteilung aus einem Material hergestellt ist, das Polypropylen und/oder einen Verbundwerkstoff vom Typ BMC und/oder SMC enthält, und die Trennwände (LA) sind zwischen 2,5 und 3,5 Millimeter dick.

4. Vorrichtung nach einem der Ansprüche 1 bis 3, **dadurch gekennzeichnet, dass** jedes Tankbefestigungselement (CH1, CH2) einen Dämpfer (DP) umfasst, der zwischen der Befestigungsplatte (PF) und den Mitteln zum Stützen der Extremität (RE) angeordnet ist.

5. Vorrichtung nach Anspruch 4, **dadurch gekennzeichnet, dass** der Dämpfer (DP) eine Dämpfungsschicht umfasst, die aus einem Elastomermaterial und/oder einem Verbundmaterial besteht und eine Dicke zwischen 5 und 20 mm aufweist.

6. Vorrichtung nach Anspruch 5, **dadurch gekennzeichnet, dass** die Dämpfungsschicht eine gaskanalisierende Durchgangsnut (RA) umfasst.

7. Vorrichtung nach einem der Ansprüche 1 bis 6, **dadurch gekennzeichnet, dass** die Befestigungsplatte (PF) eine ringförmige Befestigungsverstärkung (RF1) umfasst, die um ein Durchgangsloch (TR3) einer Gasleitung herum angeordnet ist, wobei der Befestigungsring (RF1) der Verstärkung Folgendes umfasst mindestens ein Befestigungsschrauben-Durchgangsloch (PA1) und das Bilden der mechanischen Befestigungsschnittstelle unter dem Boden.

8. Vorrichtung nach einem der Ansprüche 1 bis 7, **dadurch gekennzeichnet, dass** die Befestigungsplatte (PF) aus Stahl oder Aluminium besteht.

9. Fahrzeug mit einem Gastank, der mindestens einen zylindrischen Wasserstoffzylinder (B) umfasst, der unter dem Boden montiert ist, **dadurch gekennzeichnet, dass** es eine Befestigungsvorrichtung nach einem der Ansprüche 1 bis 8 umfasst.

10. Fahrzeug nach Anspruch 9, hergestellt auf der Grundlage einer Standard-Fahrzeugplattform, **dadurch gekennzeichnet, dass** die Befestigungsplatten (PF) der Endbefestigungselemente (CH1, CH2) der Befestigungsvorrichtung an Standardbefestigungslaschen (PT1, PT2) der Fahrzeugplattform.

## Claims

1. Fixing device a gas tank (B) under the floor of a vehicle, said gas tank (B) being of the cylindrical type and comprising rounded ends (EA1, EA2), said device comprising first and second (CH1, CH2), each said tank fixing member (CH1, CH2) comprising a fixing plate (PF), integrating a mechanical fixing interface under the floor, and an end support means (RE) assembled with said fixing plate (PF) and having a shape (VI) adapted to receive and support a said rounded end (EA1, EA2) of said gas tank (B), **characterized in that** said end support means (RE) comprises a network of radial force distribution partitions (LA), said radial force distribution partitions (LA) being distributed around a central axis (AX) corresponding to a mounting axis of said gas tank (B) and having a contact profile (PR) adapted to a shape of surface (SR) of said rounded end (EA1, EA2).

2. Fixing device according to claim 1, **characterized in that** the said first and second reservoir fixing members (CH1, CH2) are each formed of the same standard member.

3. Device according to claim 1 or 2, **characterized in that** the said network of radial force distribution partitions (LA) is made of a material including polypropylene and/or a composite of the BMC and/or SMC type and the said partitions (LA) are between 2.5 and 3.5 millimeters thick.

4. Device according to any one of claims 1 to 3, **characterized in that** each said tank fixing member (CH1, CH2) comprises a damper (DP) arranged between said fixing plate (PF) and said means for supporting the extremity (RE).

5. Device according to claim 4, **characterized in that** the said damper (DP) comprises a damping layer formed of an elastomeric material and/or of a composite material and having a thickness of between 5 and 20 millimetres.

6. Device according to claim 5, **characterized in that** the said damping layer comprises a gas channeling passage groove (RA).

7. Device according to any one of claims 1 to 6, **characterized in that** the said fixing plate (PF) comprises an annular fixing reinforcement (RF1) arranged around a gas pipe passage hole (TR3), the said reinforcement fixing ring (RF1) comprising at least one fixing screw passage hole (PA1) and forming said mechanical fixing interface under the floor.

8. Device according to any one of claims 1 to 7, **characterized in that** the said fixing plate (PF) is made of steel or aluminium.

9. Vehicle having a gas tank comprising at least one hydrogen cylinder (B) of the cylindrical type mounted under the floor, **characterized in that** it comprises a fixing device according to any one of claims 1 to 8.

10. Vehicle according to claim 9, manufactured on the basis of a standard vehicle platform, **characterized in that** the said fixing plates (PF) of the end fixing members (CH1, CH2) of the said fixing device are fixed on lugs standard attachment (PT1, PT2) of said vehicle platform.
